(19) Europäisches Patentamt
European Patent Office
Office européen des brevets

(11) **EP 2 293 585 A1**

(12) **EUROPEAN PATENT APPLICATION**

(43) Date of publication:
**09.03.2011 Bulletin 2011/10**

(51) Int Cl.:
***H04N 13/00*** *(2006.01)*

(21) Application number: **10169496.6**

(22) Date of filing: **14.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **23.07.2009 JP 2009172490**

(71) Applicant: **Sony Corporation**
**Minato-ku**
**Tokyo 108-0075 (JP)**

(72) Inventor: **Kitazato, Naohisa**
**Minato-ku Tokyo 108-0075 (JP)**

(74) Representative: **Haines, Miles John L.S.**
**D Young & Co LLP**
**120 Holborn**
**London EC1N 2DY (GB)**

(54) **Receiving device, communication system, method of combining caption with stereoscopic image, program and data structure**

(57) A method for adding a caption to a 3D image produced by display patterns displayed on a display screen may include receiving video content data representing content display patterns. The method may also include receiving a depth parameter indicative of a frontward location of 3D images produced by display of the content display patterns represented in a portion of the video content data. Additionally, the method may include receiving caption data indicative of a caption display pattern. The method may also include combining the caption data with a subset of the portion of the video content data to create combined pattern data representing a pair of combined left-eye and combined right-eye display patterns. A horizontal position of the caption display pattern in the combined left-eye display pattern may be offset from a horizontal position of the caption display pattern in the combined right-eye display pattern based on the depth parameter.

FIG.1

## Description

BACKGROUND

The present disclosure relates to a receiving device, a communication system, a method of combining a caption with a stereoscopic image, a program, and a data structure.

A technique that generates a distance parameter indicating a position relative to which a caption based on caption data is to be displayed and then displays the caption at a certain position along the depth relative to a user in a stereoscopic display device on the decoding side has been disclosed in Japanese Unexamined Patent Application Publication No. 2004-274125, for example.

SUMMARY

However, when inserting a caption into a stereoscopic video, the display position of the caption relative to the video in the depth direction of a display screen is important. When the display position of a caption relative to a video is not appropriate, i.e. when a caption is displayed at the back of a stereoscopic video, for example, the caption appears embedded in the video, which gives a viewer a sense of discomfort.

Accordingly, there is disclosed a method for adding a caption to a three-dimensional (3D) image produced by left-eye and right-eye display patterns displayed on a display screen. The method may include receiving video content data representing content left-eye and content right-eye display patterns. The method may also include receiving a depth parameter indicative of a frontward location, with respect to a plane of the display screen, of content 3D images produced by display of the content left-eye and content right-eye display patterns represented in a portion of the video content data. Additionally, the method may include receiving caption data indicative of a caption display pattern. The method may also include combining the caption data with a subset of the portion of the video content data, the subset representing a pair of the content left-eye and content right-eye display patterns, to create combined pattern data representing a pair of combined left-eye and combined right-eye display patterns. A horizontal position of the caption display pattern in the combined left-eye display pattern may be offset from a horizontal position of the caption display pattern in the combined right-eye display pattern. And, the amount of offset between the horizontal positions of the caption display pattern may be based on the depth parameter.

BRIEF DESCRIPTION OF THE DRAWINGS

FIG. 1 is a schematic view showing a configuration of a receiving device 100 according to a first embodiment.
FIG. 2 is a schematic view showing processing performed in a caption 3D conversion unit and a combining unit.
FIG. 3 is a view showing a relationship between the position of a 3D video along the depth (frontward shift) and an offset So when a right-eye video R and a left-eye video L are displayed on a display screen of a display.
FIG. 4 is a schematic view to describe the optimum position of a caption along the depth.
FIG. 5 is a schematic view showing a relationship between an offset So and a depth Do.
FIG. 6 is a schematic view showing a relationship between an offset So and a depth Do.
FIG. 7 is a schematic view showing a technique of setting an offset of a caption based on the largest offset information of a video.
FIG. 8 is a schematic view showing a video information stream, a program information stream and a caption information stream in a digital broadcast signal.
FIG. 9 is a schematic view showing an example of describing the largest offset value to an extension area of a video ES header or a PES header with respect to each GOP, not to each program.
FIG. 10 is a schematic view showing an example of 3D display of a caption according to a second embodiment.
FIG. 11 is a schematic view showing a technique of position control of a caption.
FIG. 12 is a schematic view showing a configuration of a receiving device according to the second embodiment.
FIG. 13 is a schematic view showing caption 3D special effects according to the second embodiment.
FIG. 14 is a schematic view showing another example of caption 3D special effects.
FIG. 15 is a schematic view showing an example of moving a caption object from the back to the front of a display screen as caption 3D special effects.
FIGs. 16A and 16B are schematic views to describe a change in display size with dynamic movement of the caption object in the example of FIG. 15.
FIG. 17 is a schematic view showing a format example of caption information containing special effects specification.
FIG. 18 is a schematic view showing a technique of taking a right-eye video R and a left-eye video L of a 3D video in the broadcast station 200.

DETAILED DESCRIPTION

Hereinafter, embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Description will be given in the following order:

1. First Embodiment

    (1) Configuration of System According to Embodiment
    (2) Processing in Caption 3D Conversion Unit and Combining Unit
    (3) Illustrative Technique of Setting Offset So

2. Second Embodiment

    (1) Setting of Offset with respect to Each Caption Object
    (2) Configuration of Receiving Device according to Second Embodiment
    (3) Caption 3D Special Effects
    (4) Technique of Taking 3D Video in Broadcast Station

1. First Embodiment

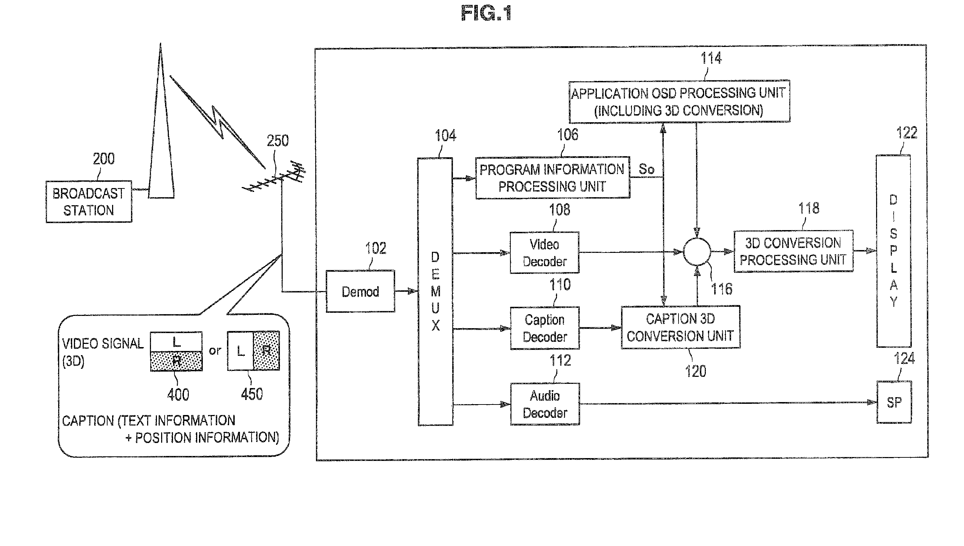

(1) Configuration of System According to Embodiment
FIG. 1 is a schematic view showing a configuration of a receiving device 100 according to a first embodiment. The receiving device 100 is a device on the user side for viewing contents such as a TV program received by a digital broadcast signal, for example, and it displays a received video on a display screen and outputs a sound. The receiving device 100 can receive and display a 3D video in side-by-side or top-and-bottom format and a normal 2D video, for example. The format of a 3D video may be different from the side-by-side or top-and-bottom format.

Referring to FIG. 1, the receiving device 100 includes a demodulation processing unit (demodulator) 102, a demultiplexer 104, a program information processing unit 106, a video decoder 108, and a caption decoder 110. The receiving device 100 further includes an audio decoder 112, an application on-screen display (OSD) processing unit 114, a combining unit 116, a 3D conversion processing unit 118, a caption 3D conversion unit 120, a display 122, and a speaker (SP) 124.

As shown in FIG. 1, a broadcast wave transmitted from the broadcast station 200 is received by an antenna 250 and transmitted to the demodulator 102 of the receiving device 100. Assume, in this embodiment, that 3D video data in a given 3D format is transmitted to the receiving device 100 by a broadcast wave. The 3D format may be top-and-bottom, side-by-side or the like, through not limited thereto.

In the case of digital broadcast, video, audio, EPG data and so on are sent out by using a transport stream of H.222 ISO/IEC IS 13818-1 Information Technology - Generic Coding of Moving Pictures and Associated Audio Information: System, for example, and the receiving device receives and divides them into images, sounds and system data and then displays the images and the sounds.

The demodulator 102 of the receiving device 100 demodulates a modulated signal and generates a data stream. Data of a packet string is thereby transmitted to the demultiplexer 104.

The demultiplexer 104 performs filtering of the data stream and divides it into program information data, video data, caption data and audio data. The demultiplexer 104 then transmits the video data to the video decoder 108 and transmits the audio data to the audio decoder 112. Further, the demultiplexer 104 transmits the program information data to the program information processing unit 106 and transmits the caption data to the caption decoder 110.

The video decoder 108 decodes the input video data and transmits the decoded video data (video content data) to the combining unit 116. The caption decoder 110 decodes the caption data and transmits the decoded caption data to the caption 3D conversion unit 120. The program information processing unit 106 decodes the program information and transmits a depth parameter (e.g., an offset So) contained in the program information to the caption 3D conversion unit 120. The offset So is described in detail later.

The audio decoder 112 decodes the input audio data and transmits the decoded audio data to the speaker 124. The speaker 124 generates sounds based on the input audio data.

As described above, video data of a 3D video in top-and-bottom format or the like is transmitted from the broadcast station 200. Thus, in the case of top-and-bottom format, the video decoded by the video decoder 108 is a video 400 in which a content right-eye display pattern of a right-eye video R and a content left-eye display pattern of a left-eye video L are arranged vertically as shown in Fig. 1. On the other and, in the case of side-by-side format, the video decoded by the video decoder 108 is a video 450 in which a content right-eye display pattern of a right-eye video R and a content left-eye display pattern of a left-eye video L are arranged horizontally.

The combining unit 116 performs processing of adding caption data to the 3D video in top-and-bottom format or the like. At this time, the same caption is added to each of the right-eye video R and the left-eye video L, and the positions of the caption added to the right-eye video R and the left-eye video L are offset from each other based on the offset So. Thus, there is a disparity between the positions of the caption in the right-eye video R and the left-eye video L.

Further, the program information processing unit 106 transmits the offset So contained in the program information to the application OSD processing unit 114. The application OSD processing unit 114 creates an OSD pattern (e.g., a logotype, message or the like) to be inserted into a video and transmits it to the combining unit 116. The combining unit 116 performs processing of adding the logotype, message or the like created in the application OSD processing unit 114 to the 3D video. At this time, the same logotype, message or the like is added to each of the right-eye video R and the left-eye video L, and the positions of the logotype, message or the like added to the right-eye video R and the left-eye video L are offset from each other based on the offset So.

The video data to which the caption or the logotype, message or the like is added (combined pattern data) is transmitted to the 3D conversion processing unit 118. The 3D conversion processing unit 118 sets a frame rate so as to display combined left-eye and combined right-eye display patterns of the combined pattern data at a high frame rate such as 240 kHz and outputs combined left-eye and combined right-eye display patterns to the display 122. The display 122 is a display such as a liquid crystal panel, for example, and displays the input 3D video with the high frame rate.

Each element shown in Fig. 1 may be implemented by hardware (circuit), or a central processing unit (CPU) and a program (software) for causing it to function.

(2) Processing in Caption 3D Conversion Unit and Combining Unit

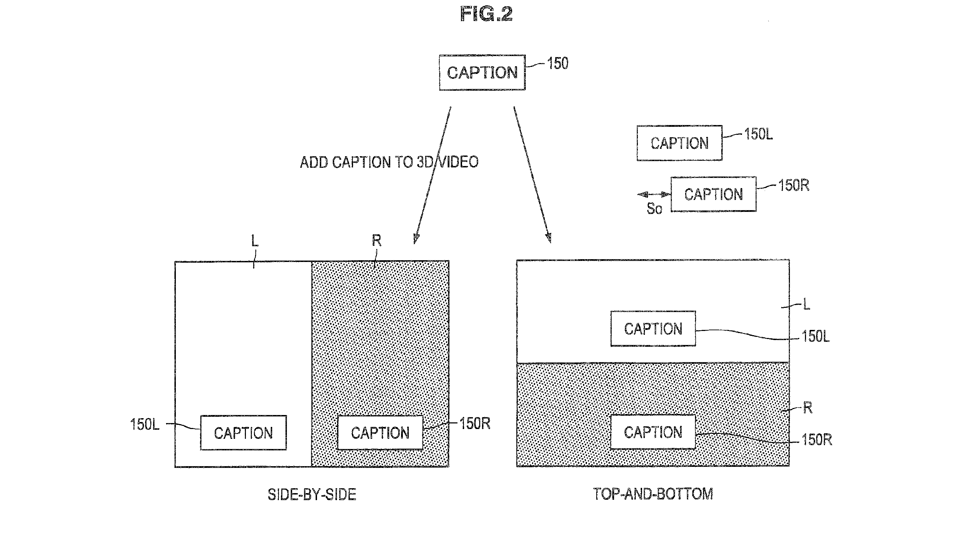

Processing performed in the caption 3D conversion unit 120 and the combining unit 116 is described in detail hereinbelow. FIG. 2 is a schematic view showing processing performed in the caption 3D conversion unit 120 and the combining unit 116. As shown in FIG. 2, a caption display pattern (e.g., caption object 150) obtained as a result of decoding in the caption decoder 110 is added to each of the right-eye video R and the left-eye video L. In this example, a caption object 150R is added to the right-eye video R, and a caption object 150L is added to the left-eye video L. FIG. 2 shows the way the caption object 150 is added in each case of the side-by-side format and the top-and-bottom format.

The caption 3D conversion unit 120 offsets the caption object 150R to be added to the right-eye video R and the caption object 150L to be added to the left-eye video L by the amount of offset So in order to adjust the position of a caption along the depth in the 3D video (frontward shift). As described above, the offset So is extracted from the program information EIT by the program information processing unit 106 and transmitted to the caption 3D conversion unit 120. By appropriately setting the value of the offset So, it is possible to flexibly set the position of a caption along the depth relative to a display screen of the display 122 when a viewer views the 3D video. The combining unit 116 offsets the caption object 150R and the caption object 150L based on the offset So specified by the caption 3D conversion unit 120 (an offset between the horizontal positions of the caption object 150R and the caption object 150L) and adds them to the right-eye video R and the left-eye video L, respectively.

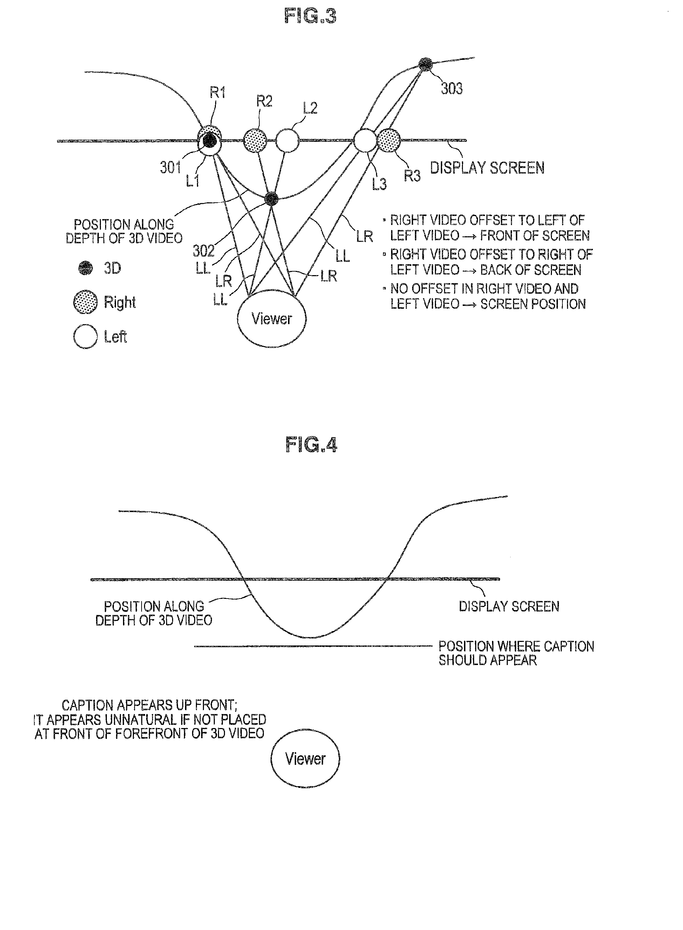

A technique of setting the position of a caption along the depth relative to the display screen with use of the offset So is described hereinafter in detail. FIG. 3 is a view showing a relationship at various points in time between the position of a 3D video along the depth (frontward shift) and the offset So when the right-eye video R and the left-eye video L are displayed on the display screen of the display 122. Thus, FIG. 3 shows the frontward locations, with respect to a plane of the display screen of the display 122, of individual 3D images of the 3D video. Each of the 3D images is produced by display of a pair of display patterns including one display pattern from the right-eye video R and one display pattern from the left-eye video L. FIG. 3 schematically shows the state when the display screen of the display 122 and a viewer (man) are viewed from above. As shown in FIG. 3, the right-eye video R and the left-eye video L are displayed on the display screen so as to display a stereoscopic video.

In FIG. 3, when the right-eye video R is offset to the left of the left-eye video L on the display screen, it appears for a user that the 3D video is shifted to the front of the display screen of the display 122. On the other hand, when the right-eye video R is offset to the right of the left-eye video L on the display screen, it appears for a user that the 3D video is shifted to the back of the display screen of the display 122. When the right-eye video R and the left-eye video L are not offset, it appears that the video is at the position of the display screen.

Thus, in FIG. 3, a stereoscopic video 3D1 displayed by a right-eye video R1 and a left-eye video L1 appears for a viewer to be placed on the display screen. Further, a stereoscopic video 3D2 displayed by a right-eye video and a left-eye video L2 appears to be shifted to the front of the display screen. Furthermore, a stereoscopic video 3D3 displayed by a right-eye video R3 and a left-eye video L3 appears to be shifted to the back of the display screen. Thus, it appears for a viewer that an object displayed by the 3D video is placed at the position indicated by the curved line in FIG. 3. In this manner, by setting the offset between the right-eye video R1 and the left-eye video L1 on the display screen, the position of the stereoscopic video along the depth relative to the display screen can be defined as indicated by the solid curved line in FIG. 3.

The position of the 3D video along the depth is a position at the intersection between a straight line LR connecting the right eye of a user and the right-eye video R and a straight line LL connecting the left eye of the user and the left-eye video L. An angle between the straight line LR and the straight line LL may be referred to as a parallax angle, and may be related to the offset So. Thus, the frontward shift from the display screen as the position of an object can be set flexibly by using the offset So. In the following description, the position of a stereoscopic video in the depth direction of the display screen is indicated by a depth Do, the position of a video appears at the front of the display screen when Do>0, and the position of a video appears at the back of the display screen when Do<0.

In this embodiment, the caption 3D conversion unit 120 determines the position of a caption along the depth by using the offset So extracted from program information and performs display. The offset So is determined in the broadcast station 200 according to the contents of a video and inserted to the program information.

FIG. 4 is a schematic view to describe the optimum position of a caption along the depth. As shown in FIG. 4, it is preferred to display a caption at the front (on the user side) of the forefront position of a 3D video. This is because if a caption is placed at the back of the forefront position of a 3D video, the caption appears embedded in the video, which causes unnatural appearance of the video.

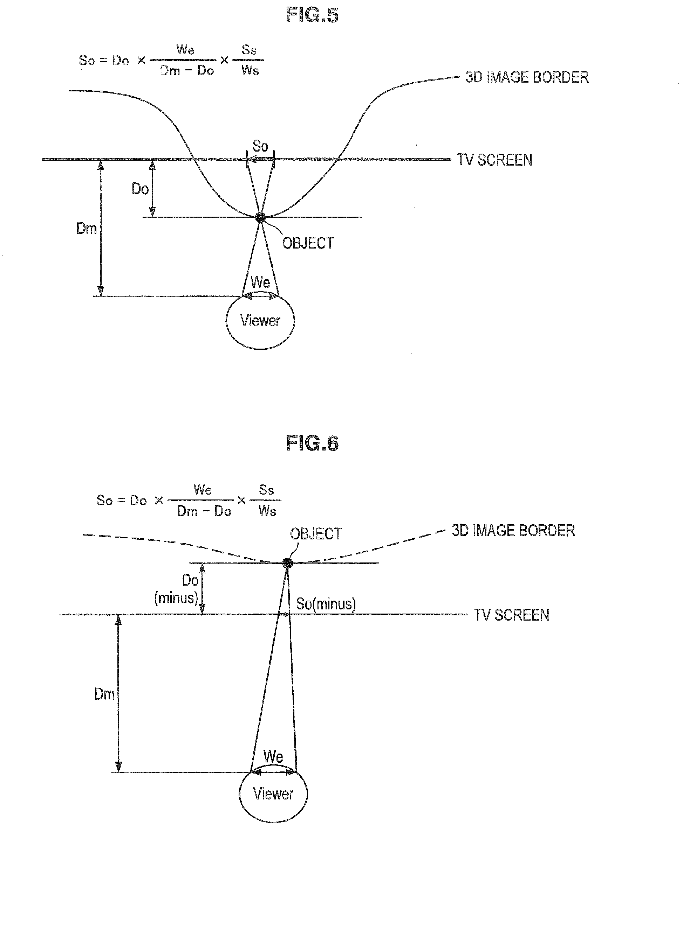

FIGS. 5 and 6 are schematic views showing a relationship between the offset So and the depth Do. FIG. 5 shows the case where an object displayed in a 3D video appears to be placed at the front of a display screen. FIG. 6 shows the case where an object displayed in a 3D video appears to be placed at the back of a display screen.

If the offset So is represented by the number of pixels of the display 122, the offset So can be calculated by the following expression (1):

$$So = Do \times (We/(Dm-Do)) \times (Ss/Ws) \qquad (1)$$

In the expression (1), We indicates the distance between the left and right eyes of a viewer, Dm indicates the distance from the eye of a viewer to the display screen of the display 122, Ss indicates the number of pixels in the horizontal direction of the display 122, and Ws indicates the width of the display 122.

In the expression (1), Do indicates the position of an object in the depth direction, and when Do>0, the object is placed at the front of the display screen. On the other hand, when Do<0, the object is placed at the back of the display screen. When Do=0, the object is placed on the display screen. Further, the offset So indicates the distance from the left-eye video L to the right-eye video R on the basis of the left-eye video L, and the direction from right to left is a plus direction in FIGS. 5 and 6. Thus, So≥0 in FIG, 5 and So<0 in FIG. 6. By setting the signs + and - of Do and So in this manner, the offset So can be calculated by the expression (1) in both cases where the object is displayed at the front of the display screen and where the object is displayed at the back of the display screen. As described above, with the expression (1), it is possible to define a relationship between the position Do of a caption along the depth relative to the display screen and the offset So.

(3) Illustrative Technique of Setting Offset So

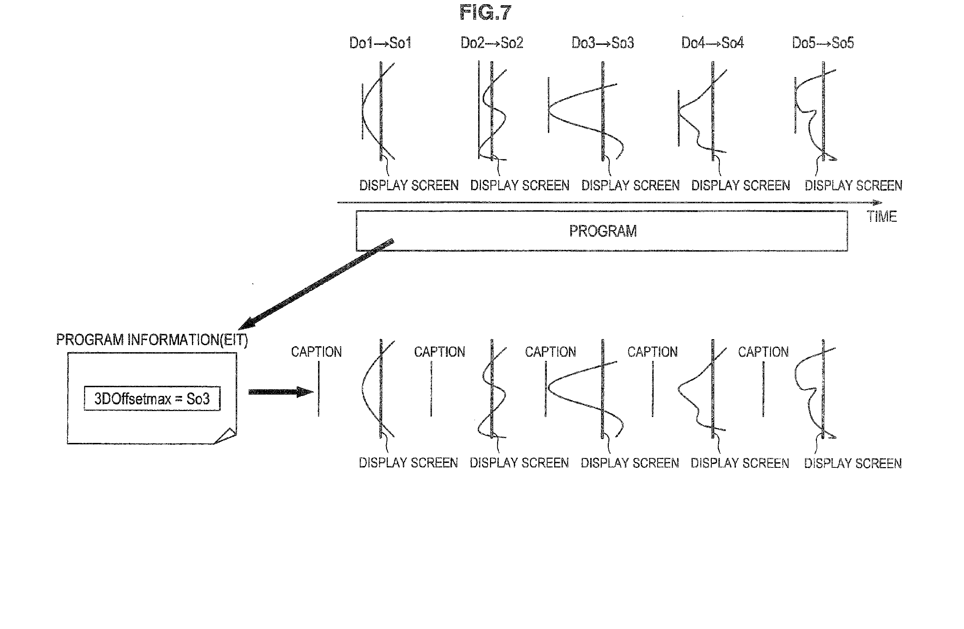

An illustrative technique of setting the offset So of a caption is described hereinbelow. FIG. 7 is a schematic view showing a technique of setting the offset of a caption based on the largest offset information of a video included in a portion of the video content data. FIG. 7 shows the way the largest value of the depth Do of the display position indicated by the curved line varies in time series in the process of displaying a video of a certain program, regarding video contents decoded by the video decoder 108 and displayed on the display 122. FIG. 7 shows the state where the display screen of the display 122 is viewed from above, just like FIG. 3 or the like.

As shown in FIG 7, the depth of the video contents varies over time sequentially like Do1, Do2, Do3, Do4 and Do5. Accordingly, the offset of the right-eye video R and the left-eye video L also varies sequentially like So1, So2, So3, So4 and So5.

In the technique shown in FIG. 7, a video of which the position along the depth is at the forefront in a certain program (video shifted at the forefront as a 3D video) is extracted in the broadcast station 200. In the example of FIG. 7, the video with the depth of Do3 is a video that is placed at the forefront, and the value of So3 is extracted as an offset which is the largest on the plus side. The extracted largest offset So3, which is indicative of a maximum frontward location, with respect to a plane of the display screen, of any 3D image of the video, is inserted into program information (e.g. EITpf, EPG data etc.) in a digital broadcast format and transmitted together with video data or the like to the receiving device 100.

In the receiving device 100, the program information processing unit 106 decodes the program information and extracts the offset So3 from the program information, and then the caption 3D conversion unit 120 sets an offset which is larger than the offset So3 on the plus side. The combining unit 116 combines the caption with the right-eye video R and the left-eye video L based on the set offset. In this manner, by displaying the caption with the offset which is larger than the offset So3 transmitted from the broadcast station 200, the caption can be displayed at the front of the video contents, thereby achieving appropriate display without giving a viewer a sense of discomfort.

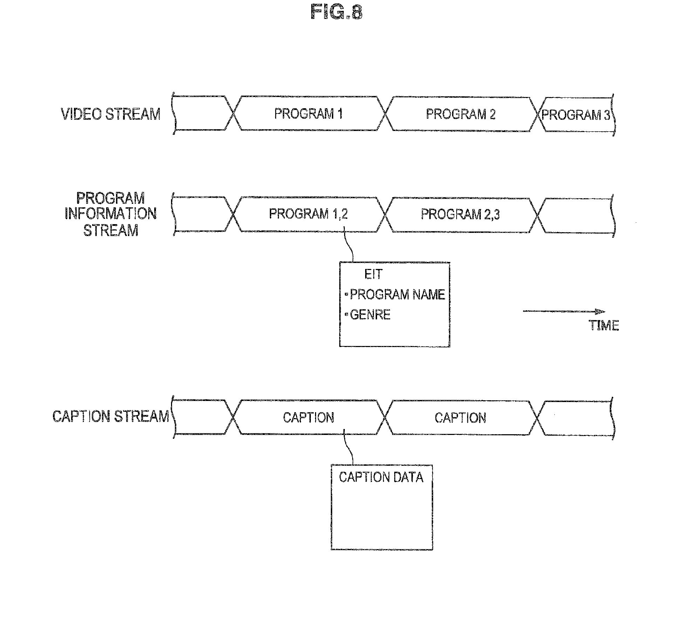

FIG. 8 is a schematic view showing a video information stream, a program information stream and a caption information stream in a digital broadcast signal. As shown in FIG. 8, when video information stream of a program 1 is received, program information of the program 1 and program information of a program 2 to be broadcasted after the program 1 are also received. Thus, the receiving device 100 can receive the offset So of a program being viewed and offset information of a program to be viewed next from the program information. It is thereby possible to display a caption object at an appropriate position along the depth in the 3D video of the program being viewed and further display a caption object at an appropriate position along the depth in a 3D video for a next program to be viewed as well.

Further, it is possible to insert the offset So also into caption data of a caption stream shown in FIG. 8. This is described in detail later in a second embodiment.

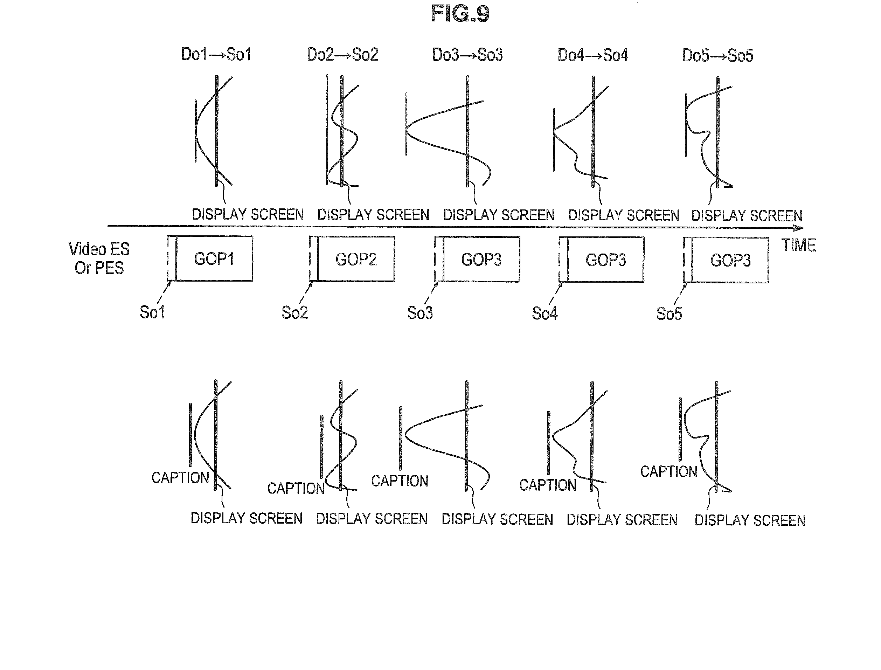

FIG. 9 is a schematic view showing an example of describing the largest offset value in an extension area of a video ES header or a PES header with respect to each GOP, not to each program. In the case of insertion into MPEG2 video (H.222 ISO/IEC IS 13818-1 Information Technology - Generic Coding of Moving Picture and Associated Audio Information: Video), for example, data may be inserted into a user data area of a picture header defined in the format. Further, data related to a 3D video may be inserted into a sequence header, a slice header or a macro-block header. In this case, the value of the offset So to be described in each GOP varies in time series sequentially like So1, So2, So3, So4 and So5.

The video decoder 108 receives an offset one by one from each GOP and transmits them to the caption 3D conversion unit 120. The caption 3D conversion unit 120 sets an offset which is larger than the received offset So on the plus side, and then the combining unit 116 combines the caption with the right-eye video R and the left-eye video L. The above configuration allows switching of offsets with respect to each header of GOP and thereby enables sequential setting of the position of a caption along the depth according to a video. Therefore, upon display of a caption that is displayed at the same timing as a video in the receiving device 100, by displaying the caption with an offset which is larger than the offset of the video, it is possible to ensure appropriate display without giving a viewer a sense of discomfort.

As described above, according to the first embodiment, the offset So of the caption object 150 is inserted into a broadcast signal in the broadcast station 200. Therefore, by extracting the offset So, it is possible to display the caption object 150 at the optimum position along the depth in a 3D video in the receiving device 100.

2. Second Embodiment

A second embodiment of the present invention is described hereinafter. In the second embodiment, position control and special effects of 3D are performed with respect to each object based on information contained in caption data.

(1) Setting of Offset with respect to Each Caption Object

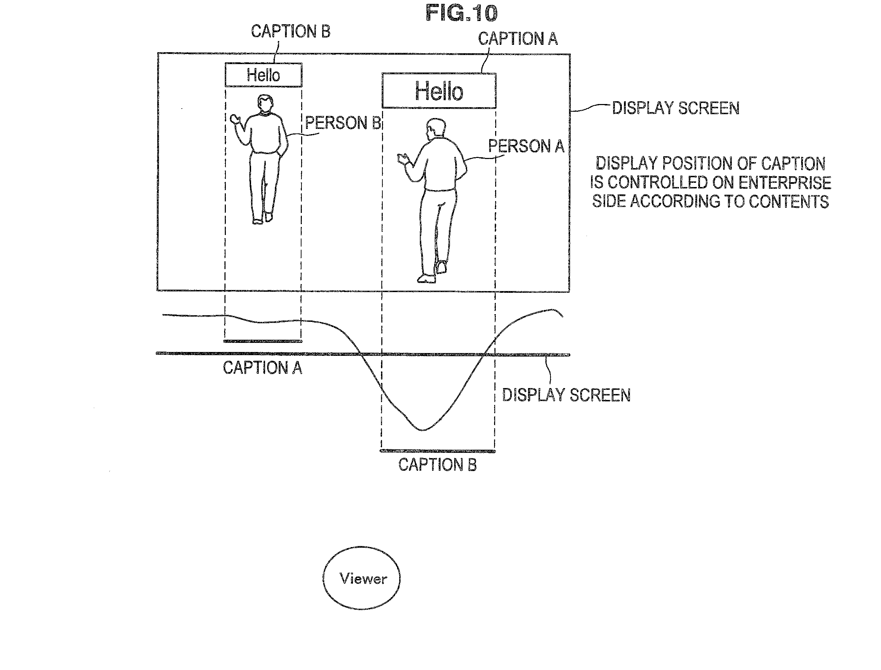

FIG. 10 is a schematic view showing an example of 3D display of a caption according to the second embodiment. In the example shown in FIG. 10, two persons A and B are displayed as a 3D video on the display screen of the display 122. Further, in close proximity to the persons A and B, words uttered by the persons A and B are displayed as captions A and B, respectively. The curved line shown below the display screen indicates the positions of the persons A and B along the depth relative to the display screen position and indicates the position of the video along the depth when the display 122 is viewed from above, just like FIG. 3 or the like.

As shown in FIG. 10, the person A is placed at the front of the display screen, and the person B is placed at the back of the display screen. In such a case, in the example of FIG. 10, the depth position of the caption is set according to the respective videos of which the depth positions are different in the display screen. In the example of FIG. 10, the caption A related to the person A is displayed in 3D so that its depth position is at the front of the person A. Further, the caption B related to the person B is displayed in 3D so that its depth position is at the front of the person B.

As described above, when displaying the caption on the display screen, the position of 3D along the depth is controlled with respect to each object of a video relevant to a caption, and information for controlling the display position of the caption is inserted into a broadcast signal according to contents in the broadcast station 200 (enterprise). The depth position of each contents of the video and the depth position of the caption thereby correspond to each other, thereby providing a natural video to a viewer.

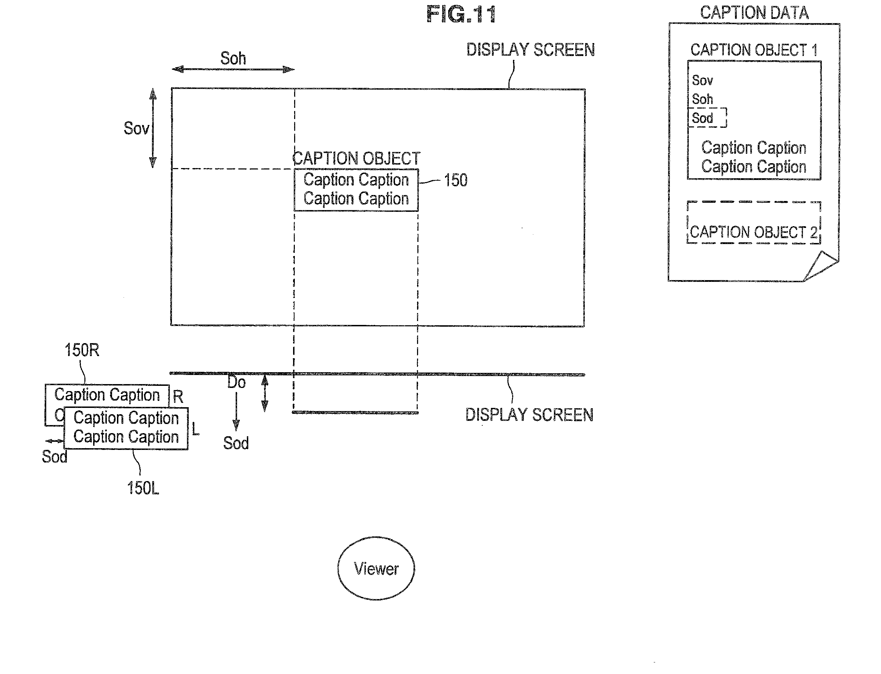

FIG. 11 is a schematic view showing a technique of position control of a caption. The position of the caption object 150 along the plane of the display screen is controlled by two parameters of a horizontal position Soh and a vertical position Sov. Further, the position along the depth is controlled by an offset Sod, as in the first embodiment. As shown in FIG. 11, in the second embodiment, the horizontal position Soh, the vertical position Sov and the offset Sod are contained in caption information (caption data) in a digital broadcast format.

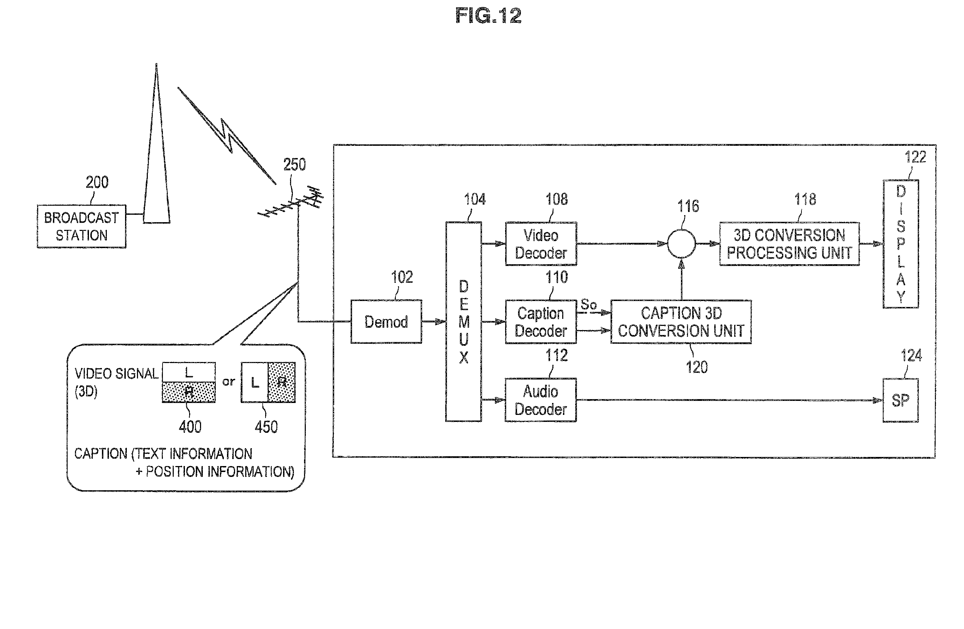

(2) Configuration of Receiving Device according to Second Embodiment
FIG. 12 is a schematic view showing a configuration of the receiving device 100 according to the second embodiment. A basic configuration of the receiving device 100 according to the second embodiment is the same as that of the receiving device 100 according to the first embodiment. In the second embodiment, the horizontal position Soh, the vertical position Sov and the offset Sod contained in the caption information are extracted by the caption decoder 110 and transmitted to the caption 3D conversion unit 120. The horizontal position Soh and the vertical position Sov are information specifying the position of the caption object 150 in the screen. As shown in FIG. 11, the horizontal position Soh defines the position of the caption object 150 in the horizontal direction, and the vertical position Sov defines the position of the caption object 150 in the vertical direction. Further, the offset Sod corresponds to the offset So in the first embodiment and specifies the position of the caption object 150 in the depth direction. The caption 3D conversion unit 120 sets the offset of a caption object 150R and a caption object 150L in right and left videos based on the offset Sod, thereby specifying the depth position of the caption object 150. Further, the caption 3D conversion unit 120 specifies the positions of the caption objects 150R and 150L of right and left videos in the display screen based on Soh and Sov. The combining unit 116 adds the caption objects 150R and 150L respectively to the right-eye video R and the left-eye video L based on Soh, Sov and Sod specified by the caption 3D conversion unit 120. Therefore, as shown in FIG. 11, the caption object 150 decoded by the caption decoder 110 is added to each of the right-eye video R and the left-eye video L at the appropriate position based on the horizontal position Soh, the vertical position Sov and the offset Sod. In this manner, the depth of 3D can be specified by the sample offset value So on the caption data, together with the screen position of the caption object 150.

Thus, when displaying a plurality of caption objects 150, the horizontal position Soh, the vertical position Sov and the offset Sod are set with respect to each caption object 150. Each caption object 150 can be thereby placed at an optimum position according to a video.

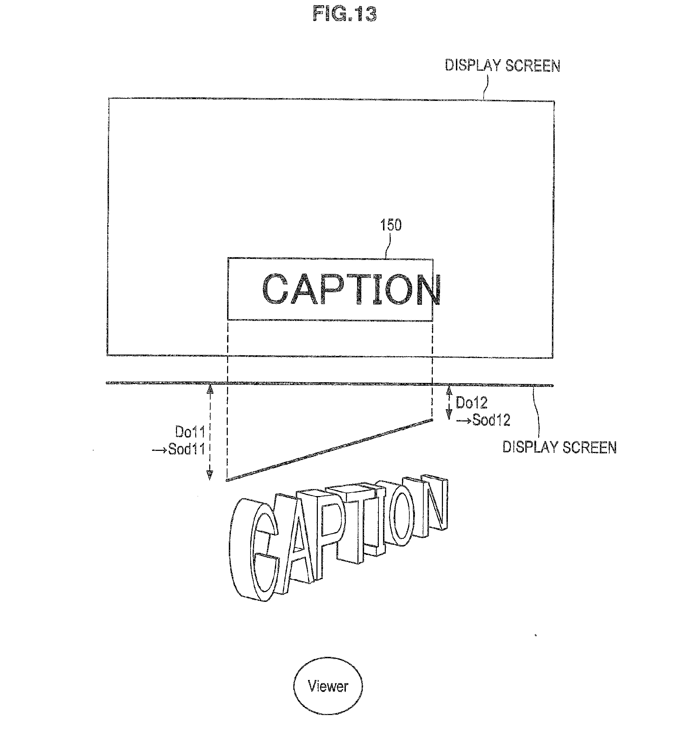

(3) Caption 3D Special Effects
FIG. 13 is a schematic view showing caption 3D special effects according to the second embodiment. As described above, in the second embodiment, the positions of the caption objects 150R and 150L in right and left videos are specified by Soh, Sov and Sod contained in caption data. With use of this, the position of the caption object 150 is specified by two different offsets in the example of FIG. 13.

In the example shown in FIG. 13, when displaying the caption object 150 "CAPTION", 3D display is performed in such a way that the left side of the caption is displayed at the front of the display screen when viewed from a viewer. Therefore, two depth parameters (e.g., offsets Sod11 and Sod12) are contained in caption data.

As shown in FIG. 13, at a first portion of the caption object 150 (e.g., the left end of the caption object 150), the offset of the caption object 150 in right and left videos is defined by an offset Sod11, and the position along the depth relative to the display screen is Do11. On the other hand, at a second portion of the caption object 150 (e.g., the right end of the caption object 150), the offset of the caption object 150 in right and left videos is defined by an offset Sod12, and the position along the depth relative to the display screen is Do12. Then, between the left end and the right end of the caption object 150, the offset is defined in the receiving device 100 in such a way that the depth position varies linearly according to the horizontal distance from the left end or right end. Thus, a viewer can view the caption object 150 that is displayed so that the left part of "CAPTION" is at the up front and the right part of "CAPTION" is at the far back.

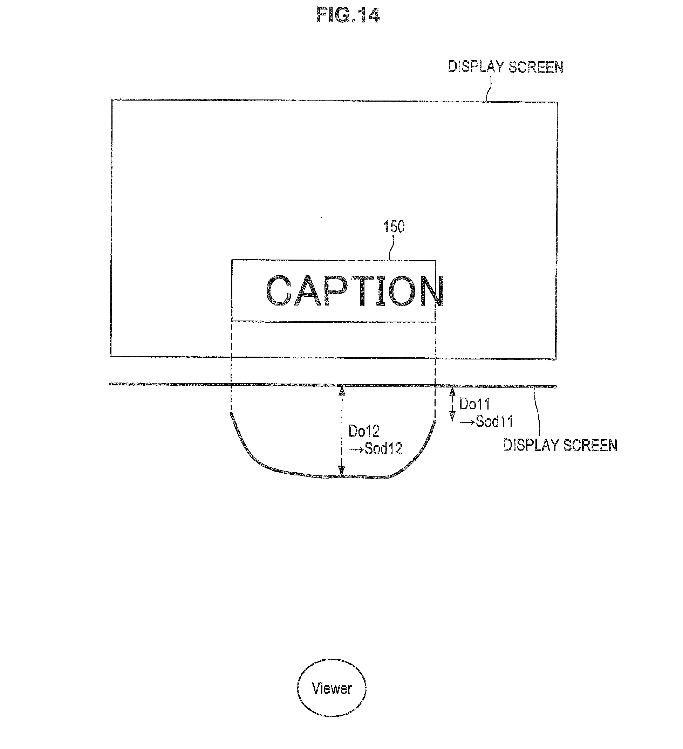

FIG. 14 is a schematic view showing another example of caption 3D special effects. In the example of FIG. 14, two portions of the caption object 150 (e.g., the left and right ends of the caption object 150) are displayed at the far back, and a third portion of the caption object 150 (e.g., the middle of the caption object 150) is displayed at the up front. Thus, in the example of FIG. 14 also, the position of the caption object is specified by two different offsets.

As shown in FIG. 14, at the left end and the right end of the caption object 150, the offset of the caption object 150 in right and left videos is defined by an offset Sod11, and the position along the depth relative to the display screen is Do11. On the other hand, at the middle of the caption object 150, the offset of the caption object 150 in right and left videos is defined by an offset Sod12, and the position along the depth relative to the display screen is Duo12. Then, between the left end and the middle and between the middle and the right end of the caption object 150, the offset is defined in the receiving device 100 in such a way that the depth position varies along a given curved line or linearly. Thus, a viewer can view the caption object 150 that is displayed so that the left and right parts of "CAPTION" are at the far back and the middle part of "CAPTION" is at the up front.

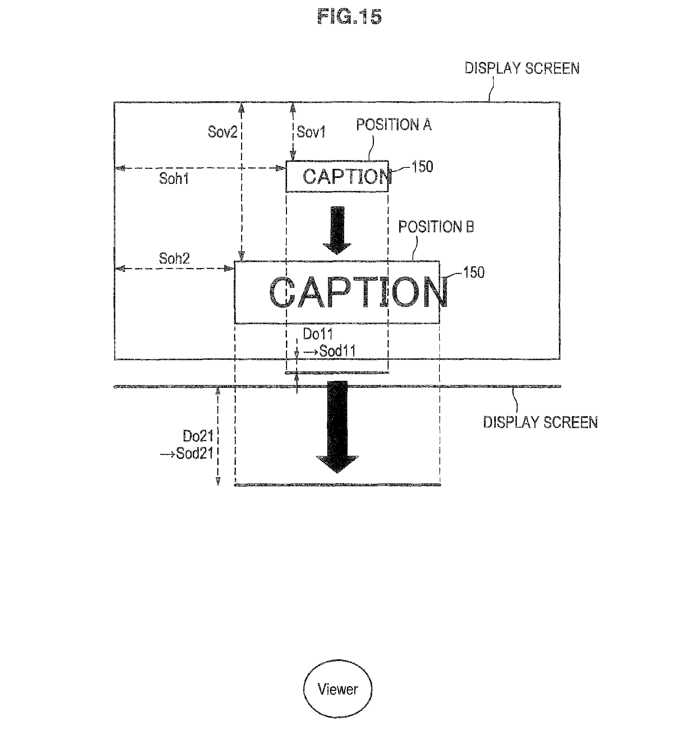

FIG. 15 is a schematic view showing an example of moving the caption object 150 from the back to the front of the display screen as caption 3D special effects. In the example of FIG. 15, when displaying the caption object 150 "CAPTION", it is moved from a position A to a position B within a certain time period, and the position along the depth is shifted from the back to the front.

Specifically, position information of the movement start position A on the screen including a first horizontal point and a first vertical point (e.g., horizontal position Soh1 and vertical position Sov1, respectively), and a first depth parameter (e.g., an offset Sod11); position information of the movement end position B on the screen including a second horizontal point and a second vertical point (e.g., horizontal position Soh2 and vertical position Sov2, respectively), and a second depth parameter (e.g., an offset Sod21); and a movement rate (e.g., a moving speed (or moving time (moving_time))) are specified by information contained in caption data. Further, in the receiving device 100, the caption object 150 is scaled by an expression (3), which is described later, and rendered to an appropriate size.

As shown in FIG. 15, in the receiving device 100, the caption object 150 is moved from the position A to the position B by combining the caption object 150 with right and left videos based on Soh1, Sov1, Soh2 and Sov2. Further, at the position A, the position of the caption object 150 along the depth is Do11 because of the offset Sod11, and, at the position B, the position of the caption object 150 along the depth is Do21 because of the offset Sod21. The position along the depth can be thereby shifted from the back to the front of the display screen when the caption object 150 is moved from the position A to the position B.

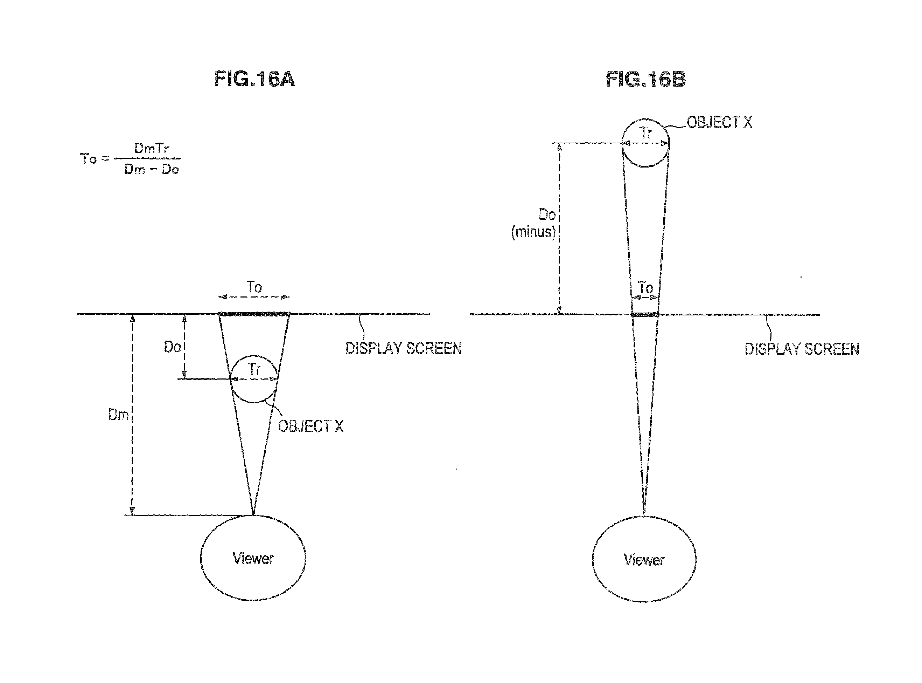

FIGs. 16A and 16B are a schematic views to describe a change in display size due to dynamic movement of the caption object 150 in the example of FIG. 15. When an object such as a caption is moved along the depth, if a display size on the display screen is fixed, the apparent size of the object becomes smaller with the frontward movement of the object. In order to keep the same apparent size of the object with the movement along the depth in 3D, scaling of the size is necessary in a display area on the display screen. FIGs. 16A and 16B are schematic views to describe the scaling.

FIG. 16A shows the case where an object (referred hereinafter to as an object X) is placed at the back of the display screen (which corresponds to the position A in FIG. 15). FIG. 16B shows the case where the object X that has moved frontward from the state of FIG. 16A is placed at the front of the display screen (which corresponds to the position B in FIG. 15). In FIGS. 16A and 16B, Tr indicates the apparent size (width) of the object A, and To indicates the size (width) of the object A on the display screen. In FIGS. 16A and 16B, To can be represented by the following expression (2)

$$To = (Dm * Tr)/(Dm - Do) \qquad (2)$$

It is assumed that the width of the object X at the position A is To1, the width of the object X at the position B is To2, and the value of To2 with respect to the value of To1 is a scaling ratio. In this case, the scaling ratio for keeping the apparent width Tr of the object X constant in FIGS. 16A and 16B is calculated by the following expression (3) with use of the offsets So1 and So2 of right and left videos at the position A and the position B and other fixed parameters.

$$To2/To1 = (Dm - Do1)/(Dm - Do2) = (Do1 \cdot So2)/(Do2 \cdot So1) = (We \cdot Ss + Ws \cdot So2)/(We \cdot Ss + Ws \cdot So1) \qquad (3)$$

As the object X moves, the following processes are repeated at successive sampling times.

    A) The scaling ratio is recalculated based on equation (3) using the offsets of each sampling time; and

B) The object X is displayed using the recalculated scaling ratio so that the apparent width Tr of the object X is kept constant over time.

As described above, because the scaling ratio can be defined by the offsets So1 and So2, it is not necessary to add a new parameter as a scaling ratio to caption data. However, when enlarging the apparent size of the object A at the position A and the position B, for example, a parameter indicating the enlargement ratio may be added to caption data.

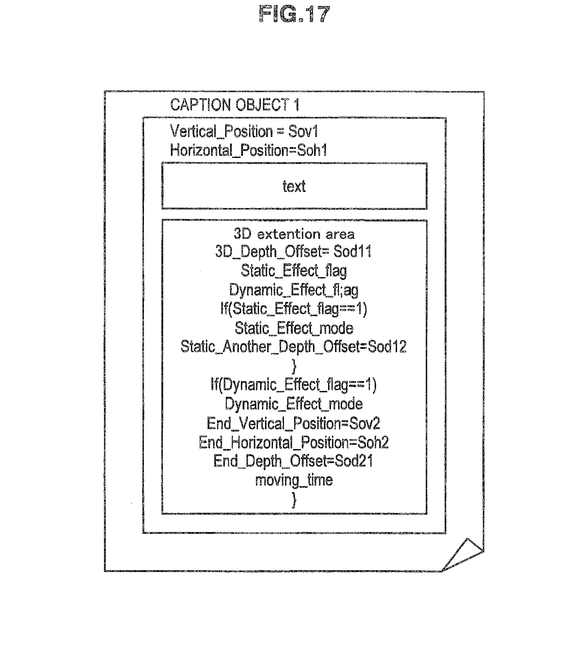

FIG. 17 is a schematic view showing a format example of caption information containing special effects specification described above. In the case of using special effects, a 3D extension area is prepared in addition to information of Sov1, Soh1 and text (information of a caption object itself).

Information included in the 3D extension area is described in detail. The 3D extension area includes information such as offsets Sod11, Sod12, Sod21 and a static effect flag (Static_Effect_flag). Further, the 3D extension area includes information such a dynamic effect flag (Dynamic_Effect_flag), a static effect mode (Static_Effect_mode), a dynamic effect mode (Dynamic_Effect_mode), an end vertical position Sov2, an end horizontal position Soh2, and moving time (moving_time).

When the static effect flag is "1", the special effects described with reference to FIGS. 13 and 14 are implemented. In this case, the special effects of FIG. 13 may be implemented when the static effect mode is "0", and the special effects of FIG. 14 may be implemented when the static effect mode is "1", for example. In this case, two offsets Sod11 and Sod12 are used.

Further, when the dynamic effect flag is "1", the special effects described with reference to FIGS. 15 and 16 are implemented. In this case, when the dynamic effect mode is "0", for example, the special effects of moving the caption object 150 from the back to the front as shown in FIG. 15 is implemented. On the other hand, when the dynamic effect mode is "1", for example, the special effects of moving the caption object 150 from the front to the back is implemented. Further, the movement of the caption object 150 to the left or right may be defined by the value of the dynamic effect mode. In this case, the offset Sod11 and the offset Sod21 define offsets at the position A and the position B, respectively. Further, the end vertical position Sov2 and the end horizontal position Soh2 are position information at the position B in FIG. 15. The moving time (moving_time) is information that defines the time to move from the position A to the position B in FIG. 15.

As described above, the receiving device 100 can implement the special effects as described in FIGS. 13 to 16 in a 3D video by receiving the caption data shown in FIG. 17.

(4) Technique of Taking 3D Video in Broadcast Station

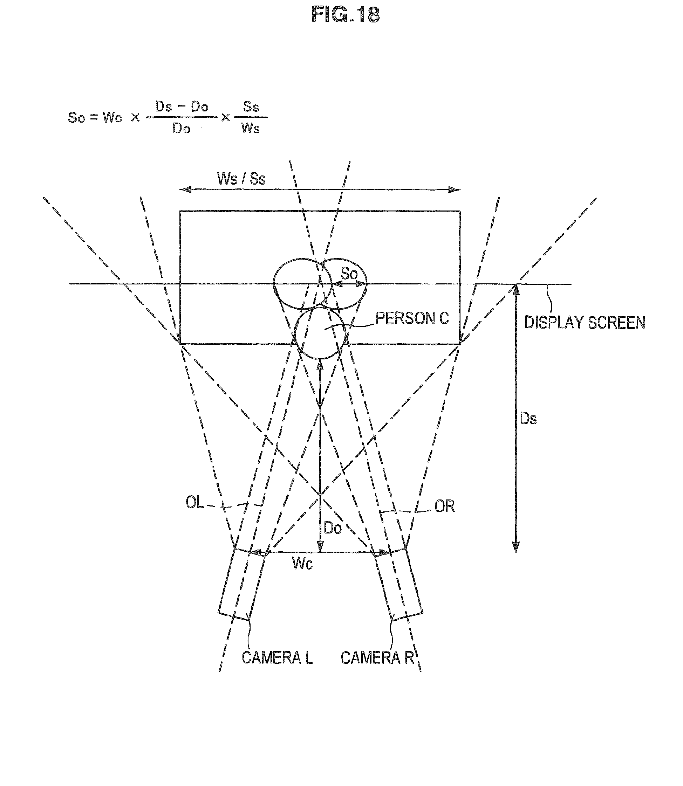

FIG. 18 is a schematic view showing a technique of taking a right-eye video R and a left-eye video L of a 3D video in the broadcast station 200. The case of taking video of a person C in a studio is described by way of illustration. As shown in FIG. 18, a camera R for taking the right-eye video R and a camera L for taking the left-eye video L are placed at the front of the person C. The intersection between the optical axis OR of the camera R and the optical axis OL of the camera L is a display screen position. It is assumed that the width of the display screen is Ws, the number of pixels in the horizontal direction of the display screen is Ss, the distance from the cameras R and L to the display screen position is Ds, the distance from the cameras R and L to the person C is Do, and the distance between the camera R and the camera L is Wc. The offset So at the display screen position can be represented by the following expression (4)

$$So = Wc * ((Ds - Do)/Do) * (Ss/Ws) \quad (4)$$

Thus, by setting the offset So obtained by the above expression to the right-eye video R and the left-eye video L respectively taken by the cameras R and L, a video of the person C which is shifted to the front of the display screen can be displayed as a stereoscopic video.

As described above, according to the second embodiment, information of the horizontal position Soh, the vertical position Sov and the offset Sod of the caption object 150 are inserted into caption data. The receiving device 100 can thereby display the caption object 150 optimally based on those information.

It should be understood by those skilled in the art that various modifications, combinations, sub-combinations and alterations may occur depending on design requirements and other factors insofar as they are within the scope of the appended claims and clauses or the equivalents thereof.

Further aspects of the invention are set out in the following numbered clauses.

1. A method for adding a caption to a three-dimensional (3D) image produced by left-eye and right-eye display patterns displayed on a display screen, comprising:

receiving video content data representing content left-eye and content right-eye display patterns;
receiving a depth parameter indicative of a frontward location, with respect to a plane of the display screen, of content 3D images produced by display of the content left-eye and content right-eye display patterns represented in a portion of the video content data;
receiving caption data indicative of a caption display pattern; and
combining the caption data with a subset of the portion of the video content data, the subset representing a pair of the content left-eye and content right-eye display patterns, to create combined pattern data representing a pair of combined left-eye and combined right-eye display patterns, wherein a horizontal position of the caption display pattern in the combined left-eye display pattern is offset from a horizontal position of the caption display pattern in the combined right-eye display pattern, the amount of offset between the horizontal positions of the caption display pattern being based on the depth parameter.

2. The method of clause 1, further including displaying the combined left-eye and combined right-eye display patterns to produce a combined 3D image in which a caption 3D image is located at least as far frontward as the frontward location of the content 3D images.

3. The method of clause 1, wherein the portion of the video content data corresponds to a program.

4. The method of clause 1, wherein the portion of the video content data corresponds to a group of pictures (GOP).

5. The method of clause 1, wherein the depth parameter is received before the portion of the video content data corresponding to the depth parameter.

6. The method of clause 1, wherein the video content data represents content left-eye and content right-eye display patterns in side-by-side format.

7. The method of clause 1, wherein the video content data represents content left-eye and content right-eye display patterns in top-and-bottom format.

8. The method of clause 1, wherein the frontward location is a maximum frontward location, with respect to the plane of the display screen, of the content 3D images.

9. The method of clause 1, wherein the depth parameter represents an offset between a horizontal position of a content left-eye display pattern and a horizontal position of a content right-eye display pattern.

10. The method of clause 1, further including:

receiving a digital broadcast signal;
generating a data stream from the digital broadcast signal; and
dividing the data stream into program information data, the video content data, and the caption data, wherein the program information data includes the depth parameter.

11. The method of clause 1, wherein creating the combined pattern data includes inserting an on screen display (OSD) pattern into each of the pair of combined left-eye and combined right-eye display patterns, wherein a horizontal position of the OSD pattern in the combined left-eye display pattern is offset from a horizontal position of the OSD pattern in the combined right-eye display pattern, the amount of offset between the horizontal positions of the OSD pattern being based on the depth parameter.

12. A receiving device for adding a caption to a three-dimensional (3D) image produced by left-eye and right-eye display patterns displayed on a display screen, the receiving device comprising:

a video decoder configured to receive video content data representing content left-eye and content right-eye display patterns;
a caption 3D conversion unit configured to receive a depth parameter indicative of a frontward location, with respect to a plane of the display screen, of content 3D images produced by display of the content left-eye and content right-eye display patterns represented in a portion of the video content data;
a caption decoder configured to receive caption data indicative of a caption display pattern; and
a combining unit configured to combine the caption data with a subset of the portion of the video content data, the subset representing a pair of the content left-eye and content right-eye display patterns, to create combined pattern data representing a pair of combined left-eye and combined right-eye display patterns, wherein a horizontal position of the caption display pattern in the combined left-eye display pattern is offset from a horizontal position of the caption display pattern in the combined right-eye display pattern, the amount of offset between the horizontal positions of the caption display pattern being based on the depth parameter.

13. A method for transmitting a signal for producing a three-dimensional (3D) image with a caption using left-eye and right-eye display patterns displayed on a display screen, comprising:

transmitting video content data representing content left-eye and content right-eye display patterns;
determining a depth parameter indicative of a frontward location, with respect to a plane of the display screen, of content 3D images to be produced by display of the content left-eye and content right-eye display patterns represented in a portion of the video content data;
transmitting the depth parameter; and
transmitting caption data indicative of a caption display pattern.

14. A method for adding a caption to a three-dimensional (3D) image produced by left-eye and right-eye display patterns displayed on a display screen, comprising:

receiving video content data representing content left-eye and content right-eye display patterns;
receiving caption data indicative of a caption display pattern, a first depth parameter, and a second depth parameter; and
combining the caption data with a subset of the video content data, the subset representing a pair of the content left-eye and content right-eye display patterns, to create combined pattern data representing a pair of combined left-eye and combined right-eye display patterns, wherein
horizontal positions of the caption display pattern in the pair of combined left-eye and combined right-eye display patterns are based on the first and second depth parameters.

15. The method of clause 14, wherein:

a horizontal position of a first portion of the caption display pattern in the combined left-eye display pattern is offset from a horizontal position of the first portion of the caption display pattern in the combined right-eye display pattern, the amount of offset between the horizontal positions of the first portion of the caption display pattern being based on the first depth parameter; and
a horizontal position of a second portion of the caption display pattern in the combined left-eye display pattern is offset from a horizontal position of the second portion of the caption display pattern in the combined right-eye display pattern, the amount of offset between the horizontal positions of the second portion of the caption display pattern being based on the second depth parameter.

16. The method of clause 15, wherein the first portion of the caption display pattern includes a first side of the caption display pattern.
17. The method of clause 16, wherein the second portion of the caption display pattern includes a second side of the caption display pattern.
18. The method of clause 15, wherein a horizontal position of a third portion of the caption display pattern in the combined left-eye display pattern is offset from a horizontal position of the third portion of the caption display pattern in the combined right-eye display pattern, the amount of offset between the horizontal positions of the third portion of the caption display pattern being based on the first and second depth parameters.
19. A method for adding a caption to successive three-dimensional (3D) images produced by successive pairs of left-eye and right-eye display patterns displayed on a display screen, comprising:

receiving video content data representing content left-eye and content right-eye display patterns;
receiving caption data indicative of a caption display pattern, a first depth parameter, and a second depth parameter;
combining the caption data with a first subset of the video content data, the first subset representing a first pair of the content left-eye and content right-eye display patterns, to create first combined pattern data representing a pair of first combined left-eye and combined right-eye display patterns; and
combining the caption data with a second subset of the video content data, the second subset representing a second pair of the content left-eye and content right-eye display patterns, to create second combined pattern data representing a pair of second combined left-eye and combined right-eye display patterns, wherein a first size of the caption display pattern in the first combined left-eye and combined right-eye display patterns is scaled relative to a second size of the caption display pattern in the second combined left-eye and combined right-eye display patterns, a ratio of the scaling being based on the first and second depth parameters.

20. The method of clause 19, wherein:

a horizontal position of the caption display pattern in the first combined left-eye display pattern is offset from a horizontal position of the caption display pattern in the first combined right-eye display pattern, the amount of offset between the horizontal positions of the caption display pattern in the first combined left-eye and combined right-eye display patterns being based on the first depth parameter; and

a horizontal position of the caption display pattern in the second combined left-eye display pattern is offset from a horizontal position of the caption display pattern in the second combined right-eye display pattern, the amount of offset between the horizontal positions of the caption display pattern in the second combined left-eye and combined right-eye display patterns being based on the second depth parameter.

21. The method of clause 19, wherein:

the caption data is also indicative of a first horizontal point and a second horizontal point;
horizontal positions of the caption display pattern in the first combined left-eye and combined right-eye display patterns are based on the first horizontal point; and
horizontal positions of the caption display pattern in the second combined left-eye and combined right-eye display patterns are based on the second horizontal point.

22. The method of clause 19, wherein:

the caption data is also indicative of a first vertical point and a second vertical point;
vertical positions of the caption display pattern in the first combined left-eye and combined right-eye display patterns are based on the first vertical point; and
vertical positions of the caption display pattern in the second combined left-eye and combined right-eye display patterns are based on the second vertical point.

**Claims**

**1.** A method for adding a caption to a three-dimensional (3D) image produced by left-eye and right-eye display patterns displayed on a display screen, comprising:

receiving video content data representing content left-eye and content right-eye display patterns;
receiving a depth parameter indicative of a frontward location, with respect to a plane of the display screen, of content 3D images produced by display of the content left-eye and content right-eye display patterns represented in a portion of the video content data;
receiving caption data indicative of a caption display pattern; and
combining the caption data with a subset of the portion of the video content data, the subset representing a pair of the content left-eye and content right-eye display patterns, to create combined pattern data representing a pair of combined left-eye and combined right-eye display patterns, wherein a horizontal position of the caption display pattern in the combined left-eye display pattern is offset from a horizontal position of the caption display pattern in the combined right-eye display pattern, the amount of offset between the horizontal positions of the caption display pattern being based on the depth parameter.

**2.** The method of claim 1, further including displaying the combined left-eye and combined right-eye display patterns to produce a combined 3D image in which a caption 3D image is located at least as far frontward as the frontward location of the content 3D images.

**3.** The method of claim 1, wherein the portion of the video content data corresponds to a program, or to a group of pictures (GOP).

**5.** The method of claim 1, wherein the depth parameter is received before the portion of the video content data corresponding to the depth parameter.

**6.** The method of claim 1, wherein the video content data represents content left-eye and content right-eye display patterns in side-by-side format, or
top-and-bottom format.

**7.** The method of claim 1, wherein the frontward location is a maximum frontward location, with respect to the plane of the display screen, of the content 3D images.

**8.** The method of claim 1, wherein the depth parameter represents an offset between a horizontal position of a content left-eye display pattern and a horizontal position of a content right-eye display pattern.

**9.** The method of claim 1, further including:

> receiving a digital broadcast signal;
> generating a data stream from the digital broadcast signal; and
> dividing the data stream into program information data, the video content data, and the caption data, wherein the program information data includes the depth parameter.

**10.** The method of claim 1, wherein creating the combined pattern data includes inserting an on screen display (OSD) pattern into each of the pair of combined left-eye and combined right-eye display patterns, wherein a horizontal position of the OSD pattern in the combined left-eye display pattern is offset from a horizontal position of the OSD pattern in the combined right-eye display pattern, the amount of offset between the horizontal positions of the OSD pattern being based on the depth parameter.

**11.** A receiving device for adding a caption to a three-dimensional (3D) image produced by left-eye and right-eye display patterns displayed on a display screen, the receiving device comprising:

> a video decoder configured to receive video content data representing content left-eye and content right-eye display patterns;
> a caption 3D conversion unit configured to receive a depth parameter indicative of a frontward location, with respect to a plane of the display screen, of content 3D images produced by display of the content left-eye and content right-eye display patterns represented in a portion of the video content data;
> a caption decoder configured to receive caption data indicative of a caption display pattern; and
> a combining unit configured to combine the caption data with a subset of the portion of the video content data, the subset representing a pair of the content left-eye and content right-eye display patterns, to create combined pattern data representing a pair of combined left-eye and combined right-eye display patterns, wherein a horizontal position of the caption display pattern in the combined left-eye display pattern is offset from a horizontal position of the caption display pattern in the combined right-eye display pattern, the amount of offset between the horizontal positions of the caption display pattern being based on the depth parameter.

**12.** A method for transmitting a signal for producing a three-dimensional (3D) image with a caption using left-eye and right-eye display patterns displayed on a display screen, comprising:

> transmitting video content data representing content left-eye and content right-eye display patterns;
> determining a depth parameter indicative of a frontward location, with respect to a plane of the display screen, of content 3D images to be produced by display of the content left-eye and content right-eye display patterns represented in a portion of the video content data;
> transmitting the depth parameter; and
> transmitting caption data indicative of a caption display pattern.

**13.** A method for adding a caption to a three-dimensional (3D) image produced by left-eye and right-eye display patterns displayed on a display screen, comprising:

> receiving video content data representing content left-eye and content right-eye display patterns;
> receiving caption data indicative of a caption display pattern, a first depth parameter, and a second depth parameter; and
> combining the caption data with a subset of the video content data, the subset representing a pair of the content left-eye and content right-eye display patterns, to create combined pattern data representing a pair of combined left-eye and combined right-eye display patterns, wherein
> horizontal positions of the caption display pattern in the pair of combined left-eye and combined right-eye display patterns are based on the first and second depth parameters.

**14.** The method of claim 13, wherein:

a horizontal position of a first portion of the caption display pattern in the combined left-eye display pattern is offset from a horizontal position of the first portion of the caption display pattern in the combined right-eye display pattern, the amount of offset between the horizontal positions of the first portion of the caption display pattern being based on the first depth parameter; and

a horizontal position of a second portion of the caption display pattern in the combined left-eye display pattern is offset from a horizontal position of the second portion of the caption display pattern in the combined right-eye display pattern, the amount of offset between the horizontal positions of the second portion of the caption display pattern being based on the second depth parameters.

15. A method for adding a caption to successive three-dimensional (3D) images produced by successive pairs of left-eye and right-eye display patterns displayed on a display screen, comprising:

receiving video content data representing content left-eye and content right-eye display patterns;

receiving caption data indicative of a caption display pattern, a first depth parameter, and a second depth parameter;

combining the caption data with a first subset of the video content data, the first subset representing a first pair of the content left-eye and content right-eye display patterns, to create first combined pattern data representing a pair of first combined left-eye and combined right-eye display patterns; and

combining the caption data with a second subset of the video content data, the second subset representing a second pair of the content left-eye and content right-eye display patterns, to create second combined pattern data representing a pair of second combined left-eye and combined right-eye display patterns, wherein a first size of the caption display pattern in the first combined left-eye and combined right-eye display patterns is scaled relative to a second size of the caption display pattern in the second combined left-eye and combined right-eye display patterns, a ratio of the scaling being based on the first and second depth parameters.

FIG.1

EP 2 293 585 A1

FIG.2

## FIG.3

R1 R2 L2

303

301

DISPLAY SCREEN

L1

POSITION ALONG
DEPTH OF 3D VIDEO

L3 R3

• RIGHT VIDEO OFFSET TO LEFT OF
  LEFT VIDEO → FRONT OF SCREEN
• RIGHT VIDEO OFFSET TO RIGHT OF
  LEFT VIDEO → BACK OF SCREEN
• NO OFFSET IN RIGHT VIDEO AND
  LEFT VIDEO → SCREEN POSITION

LR

302

LL

LL

LR

LR

LL

● 3D

◉ Right

○ Left

Viewer

## FIG.4

POSITION ALONG
DEPTH OF 3D VIDEO

DISPLAY SCREEN

POSITION WHERE CAPTION
SHOULD APPEAR

CAPTION APPEARS UP FRONT;
IT APPEARS UNNATURAL IF NOT PLACED
AT FRONT OF FOREFRONT OF 3D VIDEO

Viewer

17

## FIG.5

$$So = Do \times \frac{We}{Dm - Do} \times \frac{Ss}{Ws}$$

3D IMAGE BORDER

So

TV SCREEN

Do

Dm

OBJECT

We

Viewer

## FIG.6

$$So = Do \times \frac{We}{Dm - Do} \times \frac{Ss}{Ws}$$

OBJECT

3D IMAGE BORDER

Do
(minus)

So(minus)

TV SCREEN

Dm

We

Viewer

EP 2 293 585 A1

# FIG.7

Do1→So1   Do2→So2   Do3→So3   Do4→So4   Do5→So5

DISPLAY SCREEN   DISPLAY SCREEN   DISPLAY SCREEN   DISPLAY SCREEN   DISPLAY SCREEN

TIME

PROGRAM

PROGRAM INFORMATION(EIT)

3DOffsetmax = So3

CAPTION   CAPTION   CAPTION   CAPTION   CAPTION

DISPLAY SCREEN   DISPLAY SCREEN   DISPLAY SCREEN   DISPLAY SCREEN   DISPLAY SCREEN

# FIG.8

VIDEO STREAM | PROGRAM 1 | PROGRAM 2 | PROGRAM 3

PROGRAM INFORMATION STREAM | PROGRAM 1,2 | PROGRAM 2,3

EIT
- PROGRAM NAME
- GENRE

TIME

CAPTION STREAM | CAPTION | CAPTION

CAPTION DATA

# FIG.9

Do1→So1    Do2→So2    Do3→So3    Do4→So4    Do5→So5

DISPLAY SCREEN  DISPLAY SCREEN  DISPLAY SCREEN  DISPLAY SCREEN  DISPLAY SCREEN

Video ES
Or PES

| GOP1 | | GOP2 | | GOP3 | | GOP3 | | GOP3 |

TIME

So1        So2        So3        So4        So5

CAPTION    CAPTION    CAPTION    CAPTION    CAPTION

DISPLAY SCREEN  DISPLAY SCREEN  DISPLAY SCREEN  DISPLAY SCREEN  DISPLAY SCREEN

EP 2 293 585 A1

# FIG.10

CAPTION B

CAPTION A

Hello

Hello

DISPLAY SCREEN

PERSON B

PERSON A

DISPLAY POSITION OF CAPTION
IS CONTROLLED ON ENTERPRISE
SIDE ACCORDING TO CONTENTS

CAPTION A

DISPLAY SCREEN

CAPTION B

Viewer

# FIG.11

DISPLAY SCREEN

Soh

Sov

CAPTION OBJECT

Caption Caption
Caption Caption —150

150R

Caption Caption R
O
Caption Caption
Caption Caption L

Sod

150L

Do

Sod

DISPLAY SCREEN

Viewer

CAPTION DATA

CAPTION OBJECT 1

Sov
Soh
Sod

Caption Caption
Caption Caption

CAPTION OBJECT 2

EP 2 293 585 A1

FIG.12

EP 2 293 585 A1

EP 2 293 585 A1

FIG.13

DISPLAY SCREEN

150

CAPTION

Do12
→Sod12

DISPLAY SCREEN

Do11
→Sod11

CAPTION

Viewer

25

## FIG.14

DISPLAY SCREEN

150

CAPTION

Do11
→Sod11

Do12
→Sod12

DISPLAY SCREEN

Viewer

# FIG.15

DISPLAY SCREEN

Sov2 | Sov1 | POSITION A

CAPTION —150

Soh1

POSITION B

Soh2

CAPTION —150

Do11
→Sod11

DISPLAY SCREEN

Do21
→Sod21

Viewer

EP 2 293 585 A1

## FIG.16A

$$To = \frac{DmTr}{Dm - Do}$$

To

Do

Dm

Tr

OBJECT X

DISPLAY SCREEN

Viewer

## FIG.16B

Tr — OBJECT X

Do
(minus)

To

DISPLAY SCREEN

Viewer

## FIG.17

CAPTION OBJECT 1

Vertical_Position = Sov1
Horizontal_Position=Soh1

text

3D extention area
3D_Depth_Offset= Sod11
Static_Effect_flag
Dynamic_Effect_fl;ag
If(Static_Effect_flag==1)
Static_Effect_mode
Static_Another_Depth_Offset=Sod12
}
If(Dynamic_Effect_flag==1)
Dynamic_Effect_mode
End_Vertical_Position=Sov2
End_Horizontal_Position=Soh2
End_Depth_Offset=Sod21
moving_time
}

# FIG.18

$$So = Wc \times \frac{Ds - Do}{Do} \times \frac{Ss}{Ws}$$

Europäisches
Patentamt

European
Patent Office

Office européen
des brevets

# EUROPEAN SEARCH REPORT

**Application Number**

EP 10 16 9496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/115222 A1 (THOMSON LICENSING [FR]; IZZAT IZZAT [US]; ZHANG DONG-QING [US]; NIJIM) 25 September 2008 (2008-09-25) | 1-3,5-7, 9,11 | INV. H04N13/00 |
| Y | * page 2, line 11 - page 11, line 33; figures 1, 7 * | 8,10, 12-15 | |
| Y | WO 2007/064159 A1 (KOREA ELECTRONICS TELECOMM [KR]; YUN KUG-JIN [KR]; HUR NAM-HO [KR]; LE) 7 June 2007 (2007-06-07) * page 6, paragraph 55 - page 9, paragraph 83; figure 3 * | 8,12,13 | |
| Y | DVB: "Application Definition Blu-ray Disc Format BD-J Baseline Application and Logical Model Definition for BD-ROM" 20050301, 1 March 2005 (2005-03-01), XP040409494 * page 24, line 8 - page 26, line 3; figures 5.5-5.7 * | 10 | |
| Y | US 2007/288844 A1 (ZINGHER ARTHUR R [US] ET AL) 13 December 2007 (2007-12-13) * page 3, paragraph 40 - page 3, paragraph 45; figures 2-3 * | 14,15 | **TECHNICAL FIELDS SEARCHED (IPC)** H04N |
| A | EP 0 735 784 A2 (SANYO ELECTRIC CO [JP]) 2 October 1996 (1996-10-02) * column 3, line 9 - column 10, line 41; figures 1-5 * | 1-3,5-15 | |

The present search report has been drawn up for all claims

| Place of search | Date of completion of the search | Examiner |
|---|---|---|
| Munich | 29 September 2010 | Dinov, Vassil |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 9496

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2010

| Patent document cited in search report | | | Publication date | Patent family member(s) | | | Publication date |
|---|---|---|---|---|---|---|---|
| WO 2008115222 | A1 | | 25-09-2008 | AT | 472230 | T | 15-07-2010 |
| | | | | CA | 2680724 | A1 | 25-09-2008 |
| | | | | CN | 101653011 | A | 17-02-2010 |
| | | | | EP | 2140688 | A1 | 06-01-2010 |
| | | | | EP | 2157803 | A1 | 24-02-2010 |
| | | | | JP | 2010521738 | T | 24-06-2010 |
| | | | | KR | 20090120492 | A | 24-11-2009 |
| | | | | US | 2010238267 | A1 | 23-09-2010 |
| WO 2007064159 | A1 | | 07-06-2007 | EP | 1955554 | A1 | 13-08-2008 |
| | | | | KR | 20070058302 | A | 08-06-2007 |
| US 2007288844 | A1 | | 13-12-2007 | NONE | | | |
| EP 0735784 | A2 | | 02-10-1996 | DE | 69608491 | D1 | 29-06-2000 |
| | | | | DE | 69608491 | T2 | 18-01-2001 |
| | | | | US | 5784097 | A | 21-07-1998 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004274125 A